Europäisches Patentamt
European Patent Office
Office européen des brevets

(19)

(11) Publication number: **0 075 863**
**A1**

# (12) EUROPEAN PATENT APPLICATION

(21) Application number: 82108795.4

(22) Date of filing: 23.09.82

(51) Int. Cl.³: C 08 L 71/04
C 08 L 25/04

(30) Priority: 25.09.81 US 305902

(43) Date of publication of application: 06.04.83 Bulletin 83/14

(84) Designated Contracting States: DE FR GB NL

(71) Applicant: GENERAL ELECTRIC COMPANY
1 River Road
Schenectady New York 12305(US)

(72) Inventor: Axelrod, Robert Jay
13 Sussex Place
Glenmont New York 12077(US)

(74) Representative: Schüler, Horst, Dr. European Patent Attorney et al,
Kaiserstrasse 41
D-6000 Frankfurt/Main 1(DE)

## (54) Improved polyphenylene ether and polyalkenyl aromatic resin compositions.

(57) The present invention relates to improved, flame retardant thermoplastic compositions of polyphenylene ether and polyalkenyl aromatic resins. Incorporation of an admixture of triarylphosphate and cyclic phosphonate having the formula:

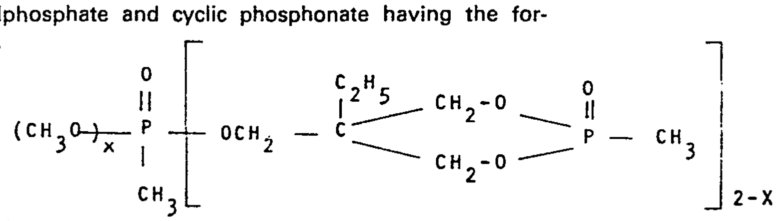

wherein x = 0 or 1
has been found to provide desirable flame retardance without loss of the important physical properties of the resin blend.

EP 0 075 863 A1

# Improved Polyphenylene Ether and Polyalkenyl Aromatic Resin Compositions

## Background of the Invention

Thermoplastic compositions containing polyphenylene ether (or oxide) in admixture with alkenyl aromatic resins are well-known. Examples are, for instance, described in U.S. Patent No. 3,383,435 of Eric P. Cizek, the disclosure of which is incorporated herein by reference.Such compositions are most generally employed in the production of molded and/or extruded articles.

A major drawback of these compositions is their inherent flammability and the side effects of conventional flame retardants. Most commonly, these retardants have adversely affected the very properties most important to the uses of these compositions.

## Introduction to the Invention

The present invention relates to improved, flame retardant thermoplastic compositions of polyphenylene ether and polyalkenyl aromatic resin. Incorporation of an admixture of triarylphosphate and cyclic phosphonate having the formula

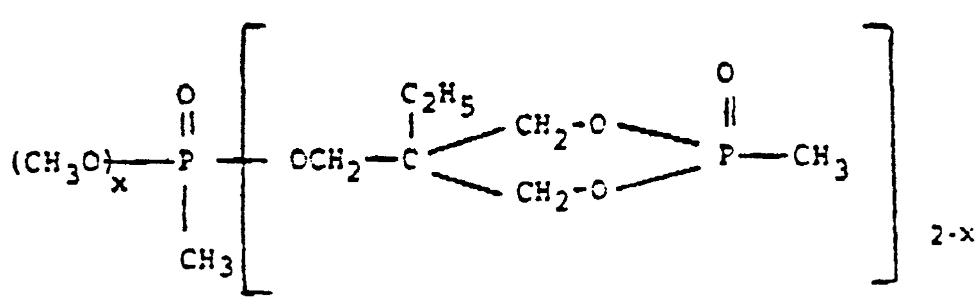

wherein x = 0 or 1

has been found to provide desirable flame retardance without loss of the important physical properties of the resin blend.

## Description of the Invention

The polyphenylene oxide resins useful in accordance with the present kinds of compositions are, as previously indicated, individually well known and readily available. There are, however, various preferred composition components. These are primarily ones commonly having applications for which high impact strength is particularly desirable.

The preferred polyphenylene ethers are homo- and copolymers of the formula:

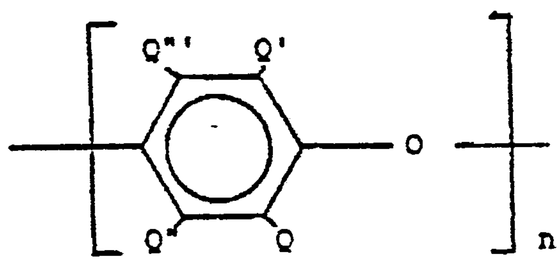

wherein Q, Q', Q" and Q"' are independently selected from the group consisting of hydrogen, hydrocarbon radicals, halohydrocarbon radicals having at least two carbon atoms between the halogen atom and the phenol nucleus, hydrocarbonoxy radicals and halohydrocarbonoxy radicals having at least two carbon atoms between the halogen atoms and the phenol nucleus; and Q', Q" and Q"' in addition may be halogen with the proviso that Q and Q' are preferably free of a tertiary carbon atom; and n represents the total number of monomer residues and is an integer of at least 50.

BAD ORIGINAL

Especially preferred is poly(2,6-dimethyl-1,4-phenylene)ether.

The alkenyl aromatic resins are likewise well known and are preferably derived from monomers of the formula:

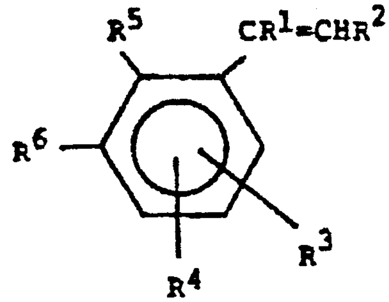

wherein $R^1$ and $R^2$ are selected from the group consisting of lower alkyl or alkenyl groups of from 1 to 6 carbon atoms and hydrogen; $R^3$ and $R^4$ are selected from the group consisting of chloro, bromo, hydrogen and lower alkyl of from 1 to 6 carbon atoms; $R^5$ and $R^6$ are selected from the group consisting of hydrogen and lower alkyl and alkenyl groups of from 1 to 6 carbon atoms, or $R^5$ or $R^6$ may be concatenated together with hydrocarbyl groups to form a naphthyl group. These compounds are also desirably free of any substituent that has a tertiary carbon atom.

Specific examples of alkenyl aromatic monomers include styrene, chlorostyrene, alpha-methylstyrene, vinyl xylene, divinylbenzene and vinyl naphthalene. Styrene is particularly preferred.

As is described in the Cizek patent, modifiers such as butadiene may be incorporated into the alkenyl aromatic resins to improve the properties of resultant compositions. Other such modifiers are also known. These include block and hydrogenated block copolymers such as are described in U.S. Patent No. 3,660,531 of

Lauchlan et al. or U.S. Patent No. 4,167,507 of Haaf. Similarly, graft-modified polymers are described in U.S. Patent Nos. 3,943,191; 3,959,211; 3,974,235; 4,101,503; 4,101,504; 4,101,505; and 4,102,850 of Glen D. Cooper et al. All of these modified polyalkenyl aromatic resins are also within the scope of the present invention.

The polyphenylene ether and polyalkenyl aromatic resin may be present in virtually any proporation in the present blends. For optimum physical properties in the blend, however, they are preferably in a weight ratio of from about 1:4 to 2:1, respectively.

Both of the constituents of the present fire retardant admixture are also individually well known and available commercially. It is the combination of these triarylphosphate and cyclic phosphonate compounds in the subject blend of polyphenylene ether and polyalkenyl aromatic resin which provides the unexpected advantages of the present invention.

While any triarylphosphate may be utilized in accordance with the present invention, triphenyl phosphate and tri(isopropylphenyl) phosphate are preferred. They appear to provide maximum fire retardance with minimum adverse affect on the physical properties of the thermoplastic blend. The use of such triarylphosphates in such blend is described in, for example, U.S. Patent No. 4,101,505 of Cooper et al., the disclosure of which is incorporated herein by reference.

The cyclic phosphonates of the present invention should have the formula:

BAD ORIGINAL

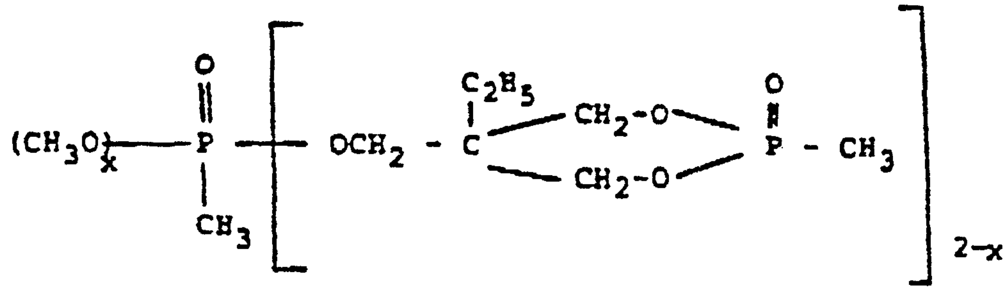

wherein x= 0 or 1.

Combinations of retardants of this formula are also desirable. The use of such retardants is described in U.S. Patent Nos. 3,789,091 and 3,849,368 of Mobil Chem., the disclosures of which are incorporated herein by reference.

The triarylphosphate and cyclic phosphonate may be admixed in any proportion. Preferably, however, they are employed in a mole ratio of from 0.1:1 to 10:1, most preferably of from 1:3 to 3:1, respectively.

The amount of the admixture of these fire retardants incorporated into the thermoplastic composition may also vary widely. While there must be an effective amount of retardant, from about 1 to 25% and most preferably from 2 to 15% by total composition weight have proven more desirable.

The compositions of the present invention are preferably prepared first by fine admixture of their ingredients; they are then desirably melt blended. This may, for example, be accomplished simply by coextrusion. A substantially homogeneous admixture is preferred.

BAD ORIGINAL

Once prepared, the present compositions may be utilized for any of the diverse purposes for which similar polyphenylene ether/polyalkenyl aromatic resin compositions have already been employed. For example, they can be used in molding powder formulations, either alone or mixed with other polymers such as the polyolefin and may contain various fillers, such as diatomaceous earth, carbon black, silica, etc., to make molded parts, such as spur, helical, worm or bevel gears, ratchets, bearings, cams, impact parts, gaskets, valve seats for high pressure oil and gas systems or other chemical fluids requiring resistance to chemicals, etc.

They can also be used to prepare molded, calendered, or extruded articles, films, coatings, threads, filaments, tapes and the like. They can be applied to a broad spectrum of uses in tbe form of sheets, rods, tapes, etc. and are useful in electrical applications, such as in cable terminals, terminal blocks, backing for electrical circuits, as components of dynamoelectric machines that operate at high temperatures, etc.

Films of these compositions can be prepared by suitable means, such as by calendering, extrusion, etc. These films are useful as metal or fiber liners, containers, covers, closures, electrical insulating tapes, as sound recording tapes, magnetic tapes, photographic films, pipe and wire tapes, etc.

As a coating material, they can be applied as a solution or suspension to any convenient foundation where a surface possessing their excellent properties is desired.

BAD ORIGINAL

Their excellent electrical properties make laminates of this material useful for electrical equipment, such as slot wedges in the armature of an electric motor, panel boards for printed circuits, electrical appliance panels, radio and television panels, small punched electrical pieces, transformer terminal boards, transformer coil spacers, etc.

The present compositions may also be mixed with various fillers, modifying agents, etc. such as dyes, pigments, stabilizers, etc. Additional thermoplastic resins and/or fire retardants may also be incorporated. All this may be performed in a conventional manner.

The following examples are given by way of illustration only and are not intended as a limitation on the scope of this invention. Many variations are possible without departing from its spirit and scope. Unless otherwise specified herein all proportions are provided on a weight basis.

EXAMPLES

Several blends of polyphenylene ether (PPO) and polystyrene (PS), some containing varying amounts of constituents of the present fire retardant admixture, are prepared. The retardant constituents employed are K-50 (a tri-(isopropylphenyl)phosphate produced by FMC Corp.) and Antiblaze 19 (a cyclic phosphonate produced by Mobil Chemical Company. The ingredients are first dry mixed and then melt blended in an extruder.

BAD ORIGINAL

The flame and physical properties of the resultant samples are tested to observe the effect of the present retardant admixture. The results are as follows:

TABLE

| Sample | Resin Ratio PPO/PS | Composition (wt.%) K-50 | Antiblaze | Properties MV | HDT | UL-94 | Izod | Gardner |
|---|---|---|---|---|---|---|---|---|
| 1 | 40/60 | -- | — | 2450 | 250 | burn | 2.8 | 130 |
| 2 | 40/60 | 12 | — | 1350 | 190 | 8 | 3.9 | 130 |
| 3 | 40/60 | — | 4.5 | 2050 | 239 | 13 | 4.2 | 120 |
| 4 | 30/70 | — | 10.0 | 1200 | 218 | 9 | 3.2 | 20 |
| 5 | 30/70 | 5 | 5.0 | 1300 | 198 | 11 | 3.0 | 130 |

MV = (poise) at 1500 $sec^{-1}$ and 282°C.
HDT = Heat distortion temperature (°F)
UL-94 = 62 mil thickness (sec)

Izod = notched Izod impact strength ft.lb./in.
Gardner = impact strength (in.-lbs.)

These results show the unexpected superiority of compositions containing the present admixtures. Sample 2, containing only triaryl phosphate, exhibits marked improvement in flame retardance over the blend alone (Sample 1). However, this improvement is at the expense of undesirable loss of heat distortion temperature.

Samples 3 and 4 containing only cyclic phosphonate, emphasize the relatively greater amount of such retardant necessary to achieve a satisfactory fire rating.

Moreover, they indicate the proportionate decrease in impact strength accompanying a satisfactory rating.

For Sample 5, the advantages of the present invention become clear. All properties are satisfactory at a lesser total retardant concentration than either Samples 2 or 4. Moreover, the high impact strengths are achieved even for a reduced polyphenylene ratio at which this property would normally decline.

The above patents and/or publications are incorporated herein by reference. Obviously, other modifications and variations of the present invention are possible, in light of the above teachings. For instance, instead of poly(2,6-dimethyl-1,4-phenylene)ether, copolymers such as poly(2,6-dimethyl- co-2,3,6-trimethyl-1,4-phenylene)ether can be used. Other ingredients such as fillers and/or reinforcements, drip retardants, plasticizers, anti-oxidants, colorants, can be included in conventional amounts. It is therefore, to be understood that changes may be made in the particular embodiments of the invention described which are within the full intended scope of the invention as defined by the appended claims.

10135-8CN-3017



CLAIMS

1. In a thermoplastic composition comprising a blend of polyphenylene ether, polyalkenyl aromatic resin and an effective amount of flame retardent, the improvement wherein said flame retardent comprises an admixture of at least one triarylphosphate and at least one cyclic phosphonate having the formula:

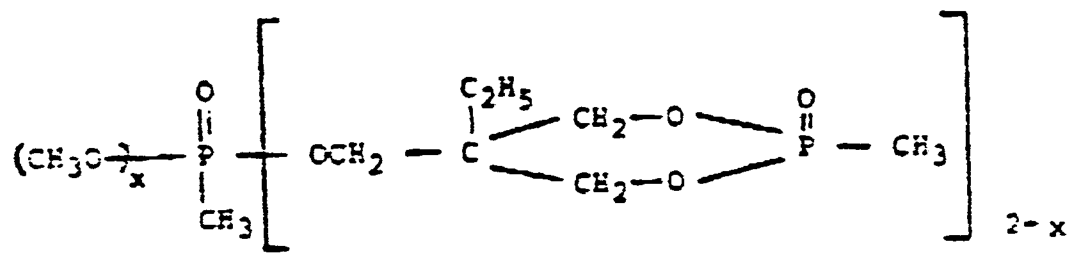

wherein x = 0 or 1.

2. The composition of Claim 1, wherein the triarylphosphate and cyclic phosphonate are in a mole ratio of from 0.1:1 to 10:1.

3. The composition of Claim 2, wherein the admixture is between 1 and 25% by total composition weight.

4. The composition of Claim 3, wherein the polyphenylene ether and polyalkenyl aromatic resin are in a weight ratio of from about 1:4 to 2:1.

5. The composition of any of claims 1 to 3, wherein the triarylphosphate is selected from the group consisting of triphenylphosphate and tri-(isopropylphenyl) phosphate.

6. The composition of claim 1 or 4, wherein the polyalkenyl aromatic resin is polystyrene.

European Patent Office

# EUROPEAN SEARCH REPORT

0075863
Application number

EP 82 10 8795

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| | --- | | C 08 L 71/04<br>C 08 L 25/04 |
| D,A | FR-A-2 164 579 (NOBIL OIL)<br>*Claims* | 1 | |
| | --- | | |
| A | FR-A-2 401 956 (G.E.N.ELECTRIC)<br>*Claims* | 1 | |
| | ----- | | |
| | | | TECHNICAL FIELDS SEARCHED (Int. Cl. 3) |
| | | | C 08 L<br>C 08 K |

The present search report has been drawn up for all claims

| Place of search | Date of completion of the search | Examiner |
|---|---|---|
| THE HAGUE | 13-12-1982 | DERAEDT G. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document